# EUROPEAN PATENT SPECIFICATION

(11) **EP 4 338 017 B1**
(45) Date of publication and mention of the grant of the patent: **01.04.2026**
(21) Application number: 22740781.4
(22) Date of filing: 24.06.2022
(51) Int. Cl.: G05B 17/02, G05B 19/418

(54) **SYSTEM AND METHOD FOR PERFORMING CLOSED LOOP SIMULATION IN AN IOT ENVIRONMENT**
SYSTEM UND VERFAHREN ZUR DURCHFÜHRUNG EINER GESCHLOSSENEN REGELKREISSIMULATION IN EINER IOT-UMGEBUNG
SYSTÈME ET PROCÉDÉ POUR EFFECTUER UNE SIMULATION EN BOUCLE FERMÉE DANS UN ENVIRONNEMENT DE L'IDO

(30) Priority: 25.06.2021 IN 202131028641
(43) Date of publication of application: 20.03.2024
(73) Proprietor: Siemens Aktiengesellschaft, 80333 München (DE)
(72) Inventor: CHANDRATREY, Abhinav, Pune, Maharashtra 411045 (IN); GUPTA, Hitesh, Pune, Maharashtra 411057 (IN); REDDY, Nandimandalam, Troy, Michigan 48084 (US)
(74) Representative: Isarpatent
(86) International application number: PCT/EP2022/067306
(87) International publication number: WO 2022/269020

(56) References cited:
- EP-A1- 3 780 551
- EP-A1- 3 786 740
- WO-A1-2020/040772
- US-A1- 2021 193 334

## Description

The present invention relates to the field of Internet-of-Things (IoT), and more particularly relates to a method and system for performing closed loop simulations in an IoT environment.

Engineers often use a variety of data gathered from fielded assets to design or engineer further assets having optimal and/or improved performance. Factoring in different operating environments and constraints help engineers validate their asset designs, thereby making the resulting asset more reliable and safer for a specific field of operation. In general, information on applications and an environment of use of an asset helps avoid over-engineering of the asset during design phase. Further, testing the asset virtually using real-world IoT data eliminates or reduces the need for multiple physical prototypes of the asset. Consequently, time-to-market and overall costs associated with the asset are also minimized.

In existing art, gathering of data from widely distributed assets, processing the data and/or using the data for designing or validating further assets or operations is not possible, due to complexities with respect to connectivity and data storage. Further, scaling of the data is also complex when hundreds or thousands of such assets are connected.

EP 3 786 740 A1 relates to a cloud computing system designed to manage digital twins of various assets throughout their lifecycle.

In light of the above, there exists a need for providing a mechanism to enable closed loop simulations in real-time for the purpose of, for example, validating asset designs and/or operations intended for an IoT environment.

The invention is defined by the IoT environment of claim 1 and by the cloud implemented method of claim 13. Optional aspects of the invention are provided by the dependent claims.

Disclosed herein is an IoT environment for enabling closed loop simulations, in accordance with an embodiment of the present invention. The IoT environment comprises at least one source configured to provide IoT data associated with at least one asset of at least one industrial plant, at least one user device, and a cloud computing system (102) communicatively coupled to the at least one source and the at least one user device. The cloud computing system is configured to receive IoT data associated with at least one asset of the at least one industrial plant, in real-time, from the at least one source. The cloud computing system is further adapted to configure a digital twin corresponding to at least one of the asset and a production process associated with the industrial plant based on the IoT data received.

The cloud computing system is further configured to generate at least one data package based on the configured digital twin upon receiving a request for accessing the digital twin from the user device. In an embodiment, the cloud computing system (102) generates the at least one data package based on the configured digital twin upon receiving the request for accessing the digital twin from the user device by determining a type of the request received from the user device; provisioning, based on the type of request, digital twin data to be provided to the user device; and generating the data package based on the provisioned digital twin data. The cloud computing system is further configured to transmit the at least one data package to the user device, for enabling the user device to perform one or more simulations based on the data package.

In one embodiment of the present invention, the one or more simulations performed on the user device is associated with determining behavior of a new asset adapted for the industrial plant. In an embodiment, the user device is configured to perform the one or more simulations associated with determining the behavior of the new asset, by firstly configuring an asset simulation model for a new asset, based on the data package. The asset simulation model is a simulation model corresponding to the at least one asset of the industrial plant. The user device further generates one or more asset simulation instances based on the configured asset simulation model. Furthermore, the one or more asset simulation instances are executed in a simulation environment provided on the user device, to generate one or more simulation results. Based on the one or more simulation results, an output indicative of the behavior of the new asset is provided on the user device. In a further embodiment, the user device is configured to compute optimal design parameters based on analysis of the one or more simulation results, and to generate a notification indicative of the optimal design parameters for the new asset on the user device.

In another embodiment of the present invention, the one or more simulations performed on the user device is associated with rendering a visualization of the production process associated with the industrial plant. In an embodiment, the user device is configured to perform the one or more simulations associated with rendering the visualization of the production process associated with the industrial plant, by configuring a process simulation model based on the data package. The process simulation model is a simulation model corresponding to the production process of the industrial plant. The user device is further configured to generate one or more process simulation instances based on the configured process simulation model. The user device further executes the one or more process simulation instances in a simulation environment to generate one or more simulation results. Further, a visualization of the production process in real-time is rendered, on the user device, based on the one or more simulation results. In a further embodiment, the user device is further configured to determine one or more bottlenecks associated with the production process by analyzing the one or more simulation results.

The user device may be further configured to generate one or more recommendations to overcome the one or more bottlenecks determined, based on a predetermined logic. In a preferred embodiment, the user device is further configured to validate an outcome of implementing the one or more recommendations in the production process, and to generate a notification indicating the one or more recommendations on the user device 114, if the outcome of applying the one or more recommendations to the production process is validated.

In an embodiment, the user device validates the outcome of implementing the one or more recommendations within the production process, by firstly, configuring the process simulation model based on the one or more recommendations. The user device further generates one or more process simulation instances based on the configured process simulation model. Further, the one or more process simulation instances are executed in the simulation environment, on the user device, to generate one or more further simulation results. The user device further analyzes the one or more further simulation results to determine whether the one or more bottlenecks in the production process are overcome by implementing the one or more recommendations in the production process. The one or more recommendations are validated if the one or more bottlenecks are overcome.

In an embodiment, the user device is further configured to ingest an outcome of the one or more simulations to the cloud computing system. The cloud computing system is further configured to analyze the outcome of the one or more simulations received from the user device to determine at least one insight corresponding to the industrial plant, and to provide a notification indicative of the at least one insight on a user interface.

Disclosed herein is also a cloud-implemented method for performing closed loop simulations in an IoT environment. The method comprises receiving, by a cloud computing system IoT data associated with at least one asset of at least one industrial plant, in real-time, from at least one source communicatively coupled to the cloud computing system. The method further comprises configuring a digital twin corresponding to at least one of the asset and a production process associated with the industrial plant based on the IoT data received. The method further comprises generating at least one data package based on the configured digital twin upon receiving a request for accessing the digital twin from a user device communcatively coupled to the cloud computing system.

The method further comprises transmitting the at least one data package to the user device for enabling the user device to perform one or more simulations based on the data package.

In an embodiment, the method further comprises analysing an outcome of the one or more simulations received from the user device to determine at least one insight corresponding to the industrial plant, and providing a notification indicative of the at least one insight on a user interface.

The above-mentioned attributes, features, and advantages of the present invention and the manner of achieving them, will become more apparent and understandable (clear) with the following description of embodiments of the invention in conjunction with the corresponding drawings. The illustrated embodiments are intended to illustrate, but not limit the invention, which is defined by the appended claims.

The present invention is further described hereinafter with reference to illustrated embodiments shown in the accompanying drawings, in which:
- FIG 1: is a schematic representation of an IoT environment 100, according to an embodiment of the present invention;
- FIG 2: shows a schematic representation of the user device, according to one embodiment of the present invention;
- FIG 3: shows a block diagram of a closed loop simulation module, according to one embodiment of the present invention;
- FIG 4: shows a block diagram of a digital twin management module, according to an embodiment of the present invention;
- FIG 5: shows a flowchart of a method for performing closed loop simulations in the IoT environment, according to an embodiment of the present invention;
- FIG 6: shows a flowchart of an exemplary method for performing simulations associated with determining behavior of a new asset, according to an embodiment of the present invention;
- FIG 7: shows a flowchart of an exemplary method for performing the simulations associated with rendering a visualization of a production process, according to an embodiment of the present invention; and
- FIG 8: shows a flowchart of an exemplary method for validating an outcome of implementing one or more recommendations within the production process, in accordance with an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments.

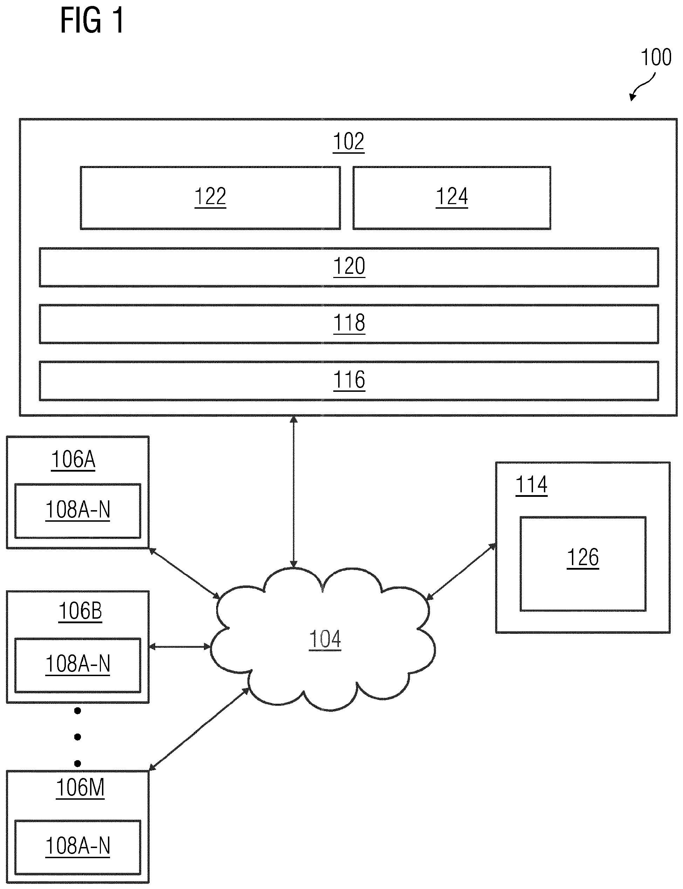

FIG 1 shows a schematic representation of an IoT environment 100, according to an embodiment of the present invention. Particularly, the IoT environment 100 includes a cloud computing system 102 which is capable of providing cloud services for managing technical installations/industrial plants 106A-M associated with one or more tenants of the cloud computing system 102. In the present example, the industrial plant 106A comprises assets 108A-N, the industrial plant 106B comprises assets 110A-N and the industrial plant 106M comprises assets 112A-N. Each of the assets 108A-N, 110A-N and 112A-N perform one or more production processes. The cloud computing system 102 is connected to assets 108A-N, assets 110A-N, assets 112A-N in the industrial plants 106A-M via a network 104. The network 104 may include for example, internet, cellular networks, satellite networks, Wi-Fi, Bluetooth, RFID, NFC, LPWAN, and Ethernet or a combination thereof. The cloud computing system 102 is further communicatively coupled to one or more user device 114, hereinafter collectively referred to as the user device 114. The user device 114 may be associated with tenants or subtenants of the cloud computing system 102.

The assets 108A-N, 110A-N, and 112A-N may hereinafter also be referred to as the asset 108 or the at least one asset 108, and the industrial plants 106A-M may be hereinafter be referred as the industrial plant 106 or the at least one industrial plant 106 for ease of explanation. Non-limiting examples of the at least one asset 108 include any machinery or 15equipment such as servers, robots, switches, motors, valves, pumps, actuators, sensors, gear, gear-drives, bearing, shaft, switchgear, rotor, circuit breaker, protection devices, remote terminal units, transformers, reactors, disconnectors, gradient coils, magnet, radio frequency coils, automation devices (such as Programmable Logic Control (PLC) systems), Computerised Numerical Control based systems (such as Sinumerik), turbines, large drives, medical equipment etc. The asset 108 may be part of a complex industrial plant 106 with a plurality of assets such as a power plant, wind farm, power grid, manufacturing facility, process plants and so on. According to the present invention, the cloud services may include generating and configuring digital twins of the at least one asset 108 or the at least one industrial plants 106, enabling simulation of the at least one asset 108, the at least one industrial plant 106 or related production processes on the user device 114, analyzing simulation results generated by the user device 114, visualizing the analyzed simulation results, etc.

The digital twin is a virtual representation of a product (i.e. asset) or process that reflects a state of the product or process in real-time. In one implementation, the digital twin for the product or process may be generated based on one or more of Computer-Aided Design (CAD) models, Computer-Aided Engineering (CAE) models, one-dimensional (1D) models, two-dimensional (2D) models, three-dimensional (3D) models, finite-element (FE) models, descriptive models, metamodels, stochastic models, parametric models, reduced-order models, statistical models, heuristic models, prediction models, ageing models, machine learning models, Artificial Intelligence models, deep learning models, system models, knowledge graphs and so on.

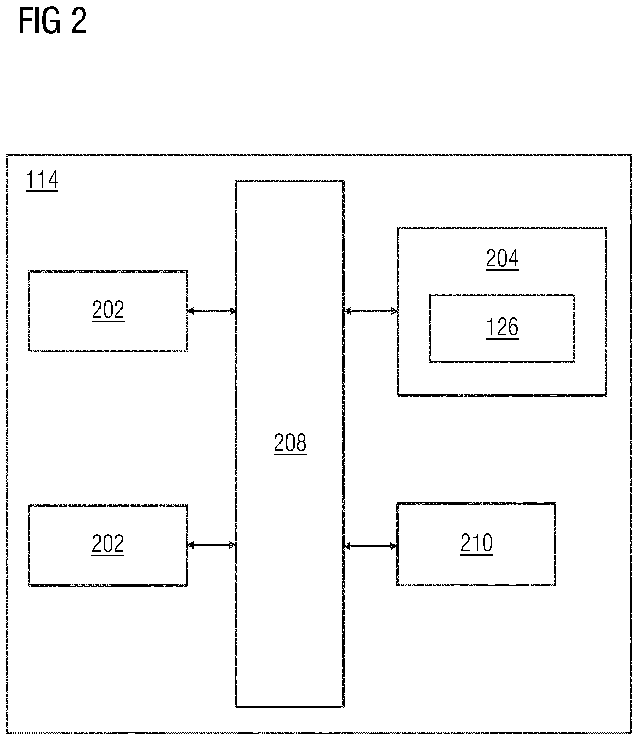

The cloud services may enable designing, engineering, manufacturing, commissioning, controlling and/or maintaining the asset 108 or industrial plants 106A-M as explained with reference to FIGS 2 to 8 below.

The cloud computing system 102 comprises a cloud interface 116, cloud hardware and Operating System (OS) 118, a cloud computing platform 120, a digital twin management module 122, and a database 124. The cloud interface 116 enables communication between the cloud computing platform 120 and the industrial plants 106A-M. Also, the cloud interface 116 enables communication between the cloud computing platform 120 and the user device 114.

The cloud hardware and OS 118 may include one or more servers on which an operating system is installed and comprising one or more processors, one or more storage devices for storing data, and other peripherals required for providing cloud computing functionality. The cloud computing platform 120 is a platform which implements functionalities such as data storage, data analysis, data visualization, data communication on the cloud hardware and OS 118 via Application Programming Interfaces and algorithms and delivers the aforementioned cloud services to the one or more tenants. The cloud computing platform 120 may comprise a combination of dedicated hardware and software built on top of the cloud hardware and OS 118.

The digital twin management module 122 is stored in the form of machine-readable instructions and executable by the cloud computing platform 120. The digital twin management module 122 is configured to manage digital twins of the at least one asset 108 and/or the at least one industrial plant 106 throughout the lifecycle of the at least one asset 108 and/or the at least one industrial plant 106. The digital twin management module 122 when executed causes the cloud computing system 102 to perform functions such as generating and configuring digital twins, providing secure access to digital twins to authorized tenants based on requirement via the respective user device 114, analyzing and visualizing one or more simulation results generated by the user device 114, etc.

The user device 114 may be a desktop computer, a laptop computer, tablet, smartphone and the like. Each of the one or more user device 114 is configured to perform one or more simulations based on digital twin data received from the cloud computing system 102, generate one or more simulation results, analyze the one or more simulation results and generate one or more outputs based on the analysis of the one or more simulation results. The digital twin data comprises values associated with the real-time IoT data, control parameters, historic data, metadata such as specifications provided by a manufacturer of the at least one asset 108 or an engineer of the at least one industrial plant 106, and asset or process modelling parameters etc. The user device 114 is also configured to ingest the one or more simulation results into the cloud computing system 102 for storage and further analysis.

Advantageously, the present invention enables tenants to generate and seamlessly access digital twins associated with the at least one asset 108 or the at least one industrial plant 106 at any time during the lifecycle of the asset 108 or the industrial plant 106 using the cloud computing system 102 in secured manner. The tenants may seamlessly simulate behavior of the asset 108 or the industrial plant 106 using the digital twins locally on the user device 114. Advantageously, the tenants may identify and address problems earlier that may occur in real-time. This may lead to reduction in time from design-to-market, and plant downtime, reduction in maintenance cost, and increase in output.

FIG 2 shows a schematic representation of the user device 114, according to one embodiment of the present invention. The user device 114 includes one or more processors 202, a memory unit 204, a storage unit 206, a communication interface 208, a cloud adapter 210.

The one or more processors 202 are capable of executing machine-readable instructions stored on a computer-readable storage medium such as the memory unit 204 for performing closed loop simulation locally in real-time based on digital twin data received from the the cloud computing system 102. Herein, the term closed loop simulation may be defined as simulations based on real-time IoT data obtained from at least one source (not shown). The at least one source may include, but are not limited to, sensing units, controllers, edge devices, workstations, that are configured to supply IoT data associated with the at least one asset 108 associated with the at least one industrial plant 106 to the cloud computing system 102. The term IoT data as used herein may include, but is not limited to, sensor data, operational statuses, controller setting parameters, load, inputs and outputs associated with the at least one asset 108.

The memory unit 204 includes a closed loop simulation module 126 stored in the form of machine-readable instructions and executable by the processor 202. The closed loop simulation module 126 is configured to simulate, locally on the user device 114, at least one portion of the industrial plant 106 or a related production process anytime throughout the lifecycle of the industrial plant 106 and/or the asset 180, i.e. from design stage to end-of-life, and to provide performance-related insights to the respective tenant.

It may be appreciated that, design process of a product inherently involves building design experiments with virtual models that simulates virtual models' response under a wide range of load sets and model parameters. These set of design experiments help the design engineers arrive at an optimal design much faster. In one exemplary implementation, the closed loop simulation module 126 performs a battery of simulation runs using different set of simulation parameter values provided by the cloud computing system 102. More specifically, the closed loop simulation module 126 feeds the digital twin data from the cloud computing system 102 to simulation tools to run the simulations. When the simulations are completed, a best-suited configuration is identified based on the one or more simulation results. Accordingly, a set of parameter values which resulted in the most desirable product operation is chosen for optimal design. This helps in designing products with best possible parameters giving optimal and efficient design.

The closed loop simulation module 126 when executed performs functions such as, but not limited to, generating simulation models, creating simulation instances using the simulation models and the digital twins, simulating various stages of lifecycle of the at least one asset 108, at least one portion of the industrial plant 106 or related production processes using the simulation instances, and performing the closed loop simulation in real time to generate simulation results. The term 'simulation instance' as used herein refers to a simulation executed in an instance or thread associated with a simulation model that is independent of all other instances or threads in execution.

The storage unit 206 may be volatile or non-volatile storage. In the preferred embodiment, the storage unit 206 stores simulation models, simulation instances, default simulation parameter values associated with the at least one asset 108, the at least one portion of the industrial plant 106, and/or related production processes, and simulation results. The communication interface 208 acts as interconnect means between different components of the user device 114. The communication interface 208 may enable communication between the processor 202, the memory unit 204 and the storage unit 206.

The cloud adapter 210 is configured to establish and maintain communication links with the cloud computing system 102. The user device 114 may also include an input unit such as a keyboard, mouse, touchscreen display and an output unit such as a graphical user interface which enables to user of the user device 114, i.e. a tenant or a sub-tenant, to perform closed loop simulation locally on the user device 114 in real-time. For example, the tenant may be an original equipment manufacturer of the at least one portion of the industrial plant 106 or the related production process, whereas the subtenant may be user of the at least one portion of the industrial plant 106 or the related production process.

Those of ordinary skilled in the art will appreciate that the hardware depicted in FIG 2 may vary for specific implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

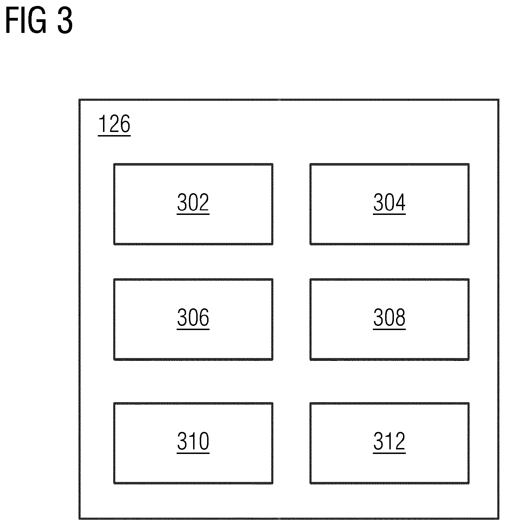

FIG 3 shows a block diagram of the closed loop simulation module 126, according to one embodiment of the present invention. Particularly, the closed loop simulation module 126 includes a simulation model generation module 302, a simulation instance creation module 304, a simulation instance execution module 306, and a simulation result generation module 308.

The simulation model generation module 302 is configured to generate one or more simulation models of the at least one portion of the industrial plant 106, the at least one asset 108 (e.g., the asset 108A) in the industrial plant 106 and/or at least one related production process in the industrial plant 106. The one or more simulation models may be configured for different simulation parameter values. Each of the one or more simulation models is capable of simulating behavior of the industrial plant 106, at least one asset 108 in the industrial plant 106 and/or at least one production process in the industrial plant 106 in a simulation environment. The one or more simulation models may include, but are not limited to, Computer-Aided Design (CAD) models, Computer-Aided Engineering (CAE) models, one-dimensional (1D) models, two-dimensional (2D) models, three-dimensional (3D) models, FE models, descriptive models, metamodels, stochastic models, parametric models, reduced-order models, statistical models, heuristic models, prediction models, ageing models, machine learning models, Artificial Intelligence models, deep learning models, system models, and knowledge graphs.

In one embodiment, the simulation model generation module 302 is configured to generate the one or more simulation models using at least one similar simulation model stored in the storage unit. In an example, the similar simulation models may identified based on a type of asset for which the one or more simulation models are to be generated. In another embodiment, the simulation model generation module 302 is configured to generate the one or more simulation models using simulation data imported from other tools such as computer-aided design tools, finite element analysis tools, and computational fluid dynamics tools, using Application Programming Interfaces (APIs) .

The simulation instance creation module 304 is configured to create one or more simulation instances associated with the at least one portion of the industrial plant 106, the at least one asset 108 in the industrial plant 106 and/or at least one production process in the industrial plant 106 using the one or more simulation models. Each of the simulation instances may be associated with a different configuration, wherein each configuration may correspond to a different set of simulation parameter values. It must be understood that the one or more simulation instances may be generated for serial execution, parallel execution etc.

The simulation instance execution module 306 is configured to execute the one or more simulation instances of the at least one portion of the industrial plant 106, the at least one asset 108 in the industrial plant 106 and/or the at least one production process in the industrial plant 106, within a simulation environment provided by a simulation tool on the user device 114. The simulation tool is a client-based or web-based application that provide an Integrated Development Environment (IDE) for enabling execution of simulations on the user device 114.

The one or more simulation instances may be executed in the simulation environment in the form of stochastic simulations, deterministic simulations, dynamic simulations, continuous simulations, discrete-event simulations, local simulations, distributed simulations and so on. In one embodiment, the simulation is based on Finite Element Analysis (FEA). Execution of the simulation instance results in simulation of behavior of the at least one portion of the industrial plant 106, the at least one asset 108 in the industrial plant 106 and/or the at least one production process in the industrial plant 106 locally and secured manner in real-time.

The simulation result generation module 308 is configured to generate one or more simulation results at the end of the execution of the simulation instances. The one or more simulation results may indicate the behavior of the at least one portion of the industrial plant 106, the at least one asset 108 in the industrial plant 106 and/or the at least one production process in the industrial plant 106.

In an embodiment, the one or more simulation results are further ingested/ transmitted to the cloud computing system 102 for analyzing the one or more simulation results to determine at least one performance attribute associated with the at least one portion of the industrial plant 106, the at least one asset 108 in the industrial plant 106 and/or at least one production process in the industrial plant 106. Apart from feeding digital twin data to the simulation model, the closed loop simulation module 126 provides seamless connectivity to the cloud computing system 102, extract the suitable digital twin data from the cloud computing system 102 and apply the suitable digital twin data to the simulation model.

Optionally, the closed loop simulation module 126 may also include a simulation result analysis module 310 configured to analyze the one or more simulation results. In other words, the simulation result analysis module may be configured to analyze the behavior of the at least one portion of the industrial plant 106 and/or the related production process anytime throughout the lifecycle of the industrial plant 106 and compare the analyzed behavior with expected behavior during a specific lifecycle stage of the industrial plant 106.

In an embodiment, the simulation result analysis module 310 is further configured to detect anomaly associated with the behavior of the at least one asset 108, the at least one portion of the industrial plant 106 or the related production process anytime throughout the lifecycle of the industrial plant 106 based on the outcome of analysis of the one or more simulation results. Here, the term 'anomaly' may include, but is not limited to, design-related deficiencies and bottlenecks in the production process. The simulation result analysis module 310 may be configured to generate one or more recommendations to prevent an anomaly from occurring. The recommendations may include actions related to preventive maintenance, change in design parameters, change in specific engineering parameters, change in specific commissioning parameters, change in specific operational parameters, etc.

In an embodiment, the closed loop simulation module 126 may include a notification module 312 configured for generating outputs associated with simulation of the at least one portion of the industrial plant 106 or the related production process anytime throughout the lifecycle of the industrial plant 106 including but not limited to one or more simulation results, anomaly determined from the one or more simulation results, recommendations to address anomalies, etc.

Advantageously, the closed loop simulation module 126 may use the digital twin data to simulate the at least one portion of the industrial plant 106 or the related production process anytime throughout the lifecycle of the industrial plant 106 or the at least one asset 108 prior to performing actions on the ground (e.g., designing, engineering, commissioning, operation, maintenance, etc.). Also, several players (e.g., designer, original equipment manufacturer, system integrator, plant operator, field engineer, etc.) may have secured access to the digital twins on the cloud computing system 102, and perform closed loop simulation locally on the user device 114 based on the digital twins in a secured manner.

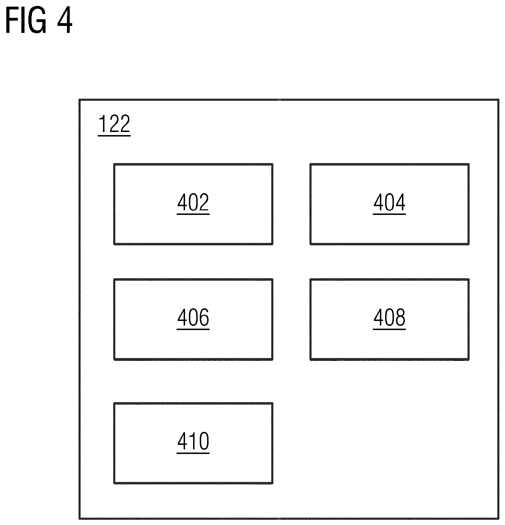

FIG 4 shows a block diagram of a digital twin management module 122, in accordance with an embodiment of the present invention. In the present embodiment, the digital twin management module 122 further comprises an IoT data processing module 402, a digital twin configuration module 404, a data packaging module 406, an analysis module 408 and a visualization module 410. The IoT data processing module 402 is configured to receive IoT data associated with the at least one asset 108 associated with the at least one industrial plant 106, in real-time, from the at least one source. The IoT data processing module 402 may also preprocess the IoT data in raw format from the at least one source into a format suitable for further processing by the digital twin configuration module 404. The digital twin configuration module 404 further configures a digital twin corresponding to at least one of the asset 108, the industrial plant 106 and the production process associated with the industrial plant 106 based on the IoT data received.

The data packaging module 406 is configured to generate at least one data package based on the configured digital twin upon receiving a request for accessing the digital twin from the user device 114. The data packaging module 406 is further configured to transmit the at least one data package to the user device 114 for enabling the user device 114 to perform one or more simulations based on the data package. The user device 114 further performs a simulation based on the data package to generate one or more simulation results. The analysis module is configured to analyze the one or more simulation results generated by the user device 114 to generate at least one insight associated with the industrial plant 106. The visualization module 410 is configured to generate a visual representation indicating the at least one insight on a user interface. The user interface may be associated with, for example, the user device 114.

The user device 114 is configured to access the cloud computing system 102 and to perform closed loop simulations locally using simulation models configured based on the data package received from the cloud computing system 102 in real-time, to generate the simulation results as mentioned earlier with reference to FIGS 2 and 3. Herein, the term 'access' may refer to being able to receive data package corresponding to digital twin of at least one asset 108, the at least one portion of the industrial plant 106 or the production process and to transmit simulation results. More specifically, asset simulation models are used to simulate behavior of the asset 108 and/ or the industrial plant 106, and process simulation models are used to simulate one or more production processes in the industrial plant 106. The simulations may be performed during one or more of design phase, engineering phase, manufacturing phase, commissioning phase, operational phase and maintenance phase of the asset 108, the industrial plant 106 or the production process.

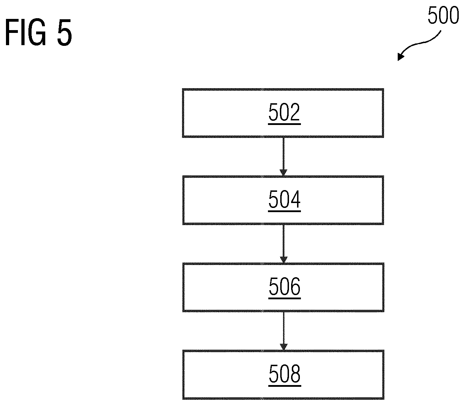

FIG 5 shows a flowchart of a method 500 for performing closed loop simulations in the IoT environment 100, according to an embodiment of the present invention. The method 500 is explained below in detail with reference to FIGS 1 to 4.

At step 502, IoT data associated with the at least one asset 108 of the at least one industrial plant 106, in real-time, from the at least one source. The IoT data is further preprocessed to convert the IoT data received from the at least one asset 108 into a format that is more suited for further processing. For example, the preprocessing may involve data conversion from a protocol-specific format to standard format. The IoT data may be preprocessed through steps such as, but not limited to, data cleaning, data quality assessment, data transformation, data reduction etc.

At step 504, a digital twin corresponding to at least one of the asset 108 and a production process associated with the industrial plant 106 is configured based on the IoT data received. It must be understood by a person skilled in the art that historical data (e.g., operation data, performance data, maintenance data, etc.) of the at least one portion of the industrial plant 106 or the related production process may be used along with the real-time IoT data to configure the digital twin of the at least one portion of the industrial plant 106 or the related production process. Herein, configuring the digital twin may be used to refer to one of generating the digital twin for the first time, or updating an existing digital twin with real-time IoT data.

In an embodiment, the digital twin management module 122 configures or generates the digital twin of the at least one asset 108, at least one portion of the industrial plant 106 or the related production process using similar digital twins available in the database 124 of the cloud computing system 102. In an alternate embodiment, the digital twin may be generated once during the lifecycle of the at least one asset 108, and updated in real-time based on the IoT data received from the at least one source.

In a further embodiment, the digital twin of the at least one asset 108, at least one portion of the industrial plant 106 or the related production process may be further validated based on a set of validation rules. Upon successful validation of the digital twin of the at least one portion of the industrial plant 106 or the related production process, a unique signature may be generated for the digital twin. The unique signature may include validation timestamp, unique identifier of the digital twin and the unique identifier of the at least one portion of the industrial plant 106 or related production process.

At step 506, at least one data package is generated, by the cloud computing system 102, based on the configured digital twin upon receiving a request for accessing the digital twin from a user device 114. In an example, the digital twin management module 122 may provide an integrated development environment (IDE) accessible via the user device 114=, to enable a designer (e.g., engineering consultant, original equipment manufacturer, plant operator, etc.) to generate digital twin of the at least one portion of the industrial plant 106 or the related production process. In an example, the designer may select an option called "Import digital twin" provided within the IDE. Further, the designer may also select one or more assets for which the digital twin has to be imported.

Upon selection, the user device 114 generates a request to access the digital twin. The request comprises for example, a unique identifier associated with the digital twin, a type of simulation intended to be performed based on the digital twin and a type of data required for the simulation. For example, the type of simulation may be one of stochastic simulations, deterministic simulations, dynamic simulations, continuous simulations, discrete system simulations, local simulations, distributed simulations and so on. The type of data required for the simulation may include for example, design data, material properties, maintenance data, engineering data, operational data, control parameters, historical data, IoT data etc. or a combination thereof, depending on type of simulation used for the simulation.

Advantageously, the cloud computing system 102 provides the user device 114 with access to various digital twins stored in the database 124. In a preferred embodiment, the cloud computing system 102 may authenticate a tenant prior to providing access to the digital twins, in order to prevent unauthorized access to the digital twins of the at least one asset 108, the at least one portion of the industrial plant 106 or the production process. The tenant may be authenticated using authentication mechanisms, including but not limited to, password-based authentication, multifactor authentication, token-based authentication, certificate-based authentication etc.

The cloud computing system 102 determines a type of the request based on the type of simulation intended to be performed based on the digital twin and the type of data required for the simulation. The digital twin is further retrieved from the database 124 based on the unique identifier of the at least one portion of the industrial plant 106 or the related production process. Based on the type of request, digital twin data to be provided to the user device 114 is provisioned. In particular, provisioning of the digital twin data includes selecting the digital twin data from data points associated with an instance or state of the digital twin in real-time. Further, the data package is generated based on the provisioned digital twin data. For example, if the asset 108 is a motor, the data package may include historical data, manufacturer's specifications, values of real-time parameters such as voltage, current, speed, magnetic flux etc associated with the motor, as measured by one or more sensors, at a specific instance, e.g. at 26th May 2022, 12:30:20 pm.

It may be understood that the digital twin data of the at least one portion of the industrial plant 106 or the related production process may be provisioned for one or more tenants of the cloud computing system 102. Accordingly, one or more tenants may access the digital twin data via the respective user device 114. The one or more tenants may also assign access to the digital twin of the at least one portion of the industrial plant 106 or the related production process to one or more subtenants.

In another embodiment, the digital twin management module 122 generates the digital twin of the at least one portion of the industrial plant 106 or the related production process using geometric models of the at least one portion of the industrial plant 106 or the related production process. In yet another embodiment, the digital twin management module 122 is configured to generate digital twin of the at least one portion of the industrial plant 106 or the related production process based on lifecycle stage of the at least one portion of the industrial plant 106 or the related production process (e.g., design, engineering, manufacturing, commissioning, operation, maintenance, etc.).

At step 508, the at least one data package is transmitted, by the cloud computing system 102, to the user device 114 for enabling the user device 114 to perform one or more simulations based on the data package. The closed loop simulation module 126 associated with the user device 114 performs the one or more simulations based on the data package to generate one or more simulation results. The data packages enables the simulation tool on the user device 114 to read and apply simulation parameter values to a simulation model. By doing so, the simulation model may mimic shopfloor production conditions virtually. In an exemplary embodiment, the closed loop simulation module 126 connects product data management applications on the cloud computing system 102, and simulation models built using standard protocols like FMI 2.0 for connecting real-world assets to simulation tools.

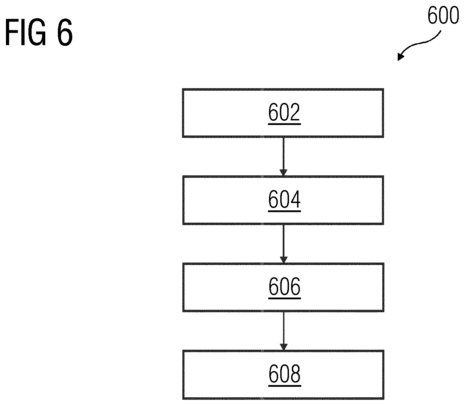

In an exemplary embodiment, the one or more simulations performed on the user device 114 is associated with determining behavior of a new asset adapted for the industrial plant 106, as explained with reference to FIG 6.

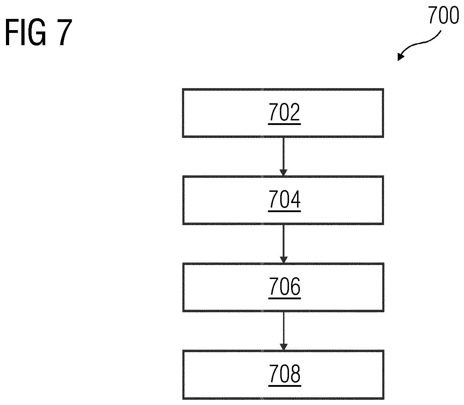

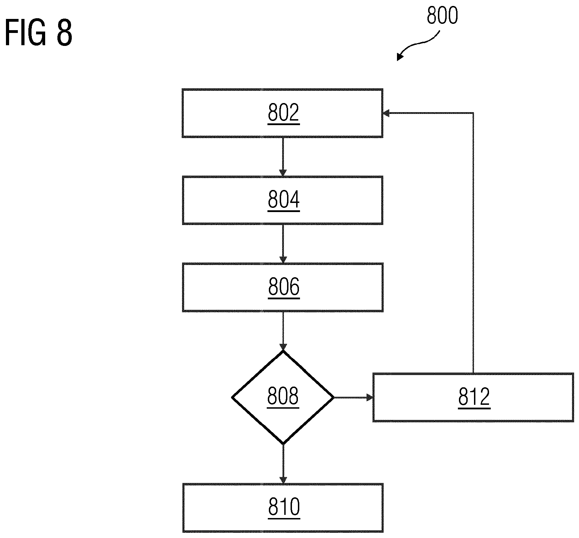

In another exemplary embodiment, the one or more simulations performed on the user device 114 is associated with a production process associated with the industrial plant 106, as explained with reference to FIGS 7 and 8.

In a further embodiment, the user device 114 may further ingest one or more simulation results generated from the simulations to the cloud computing system 102. The user device 114 may package the one or more simulation results and transmit the packaged simulation results to the cloud computing system 102 over the network 104. The cloud computing system 102 may further analyze the one or more simulation results to determine one or more insights associated with the industrial plant 106. In an example, the insight may include an attribute associated with at least one portion of the industrial plant 106. For example, simulations corresponding to a plurality of assets and/or production processes may be distributed among a plurality of user devices. The simulation results generated by the plurality of user devices may be collectively analyzed by the cloud computing system 102 to predict one or more attributes associated a behavior of the at least one portion of the industrial plant 106. Non-limiting examples of the attributes may include forecasts for manufacturing throughput, production efficiency, reaction rates, wastewater flow, energy losses, electrical load, resource utilization and remaining useful life of one or more assets, etc.

During analysis, the behavior of the at least one asset 108, at least one portion of the industrial plant 106 and/or the related production process anytime throughout the lifecycle of the industrial plant 106 and compare the analyzed behavior with expected behavior during a specific lifecycle stage of the industrial plant 106. The simulation results may be analyzed using one or more of known analysis techniques such as descriptive techniques, exploratory techniques, inferential techniques, predictive techniques, causal techniques, qualitative analysis techniques, quantitative analysis techniques and so on.

In a further embodiment, a notification indicating the at least one insight is generated, by the cloud computing system 102, on a user interface. The notification may further comprise information associated with recommendations required for improving the attribute, maintenance action required for the industrial plant 106, and a schedule for the maintenance action. In an example, the user interface is associated with the user device 114 of a tenant or subtenant. In another example, the user device 114 is an industrial monitoring system within the industrial plant 106. The notification may be rendered using, for example, augmented reality, virtual reality, three-dimensional content or two-dimensional content.

FIG 6 shows a flowchart of an exemplary method 600 for performing, on the user device 114, the simulations associated with determining behavior of a new asset (similar to at least one asset 108) adapted for the industrial plant 106, according to an embodiment of the present invention.

In the present embodiment, the simulations are performed based on asset simulation models. The asset simulation model is a simulation model of the new asset. The asset simulation model of the new asset may be, for example, readily available in the storage unit of the user device 114. In another example, one or more other simulation models for other assets similar to the new asset may be used, by an end-user of the user device 114, to define the simulation model of the new asset. For example, if the new asset is a motor of rating 420V, simulation models corresponding to other motors of similar rating may be imported by the end-user as the simulation model for the new asset.

At step 602, the simulation model generation module 302 configures an asset simulation model for the new asset, based on the data package. More specifically, configuration of the asset simulation model includes modifying simulation parameters associated with the asset simulation model based on values obtained from the data package received from the cloud computing system 102. In an embodiment, the end-user may be provided an option to modify the simulation parameters via input means associated with the user device 114.

At step 604, the simulation instance creation module 304 generates one or more asset simulation instances based on the configured asset simulation model. Herein, the asset simulation instances are simulation instances generated from the configured asset simulation model.

At step 606, the simulation instance execution module 306 executes the one or more asset simulation instances in a simulation environment, to generate one or more simulation results via the simulation result generation module 308.

At step 608, the one or more simulation results are further analyzed by, a simulation results analysis module to predict behavior of the new asset in the industrial plant 106 corresponding to the real-time IoT data. For example, the one or more simulation results may be analyzed to determine attributes such as operational parameters, operational responses, operational efficiency, potential failures etc., associated with the new asset. In the present example, effects (such as change in operational parameters, failures etc.) of a real-time load on the new motor may be determined based on analysis of the one or more simulation results, to determine anomalies in the design of the new asset. Further, an output indicative of the predicted behavior of the new asset is rendered on the user device 114. The output may be a visualization or a notification indicating the behavior.

In a further embodiment, one or more optimal design parameters for the new asset may be generated based on the analysis of the one or more simulation results. In an example, the one or more design parameters may be generated by way using an optimization algorithm. The optimization algorithm may optimize design parameters of the new asset based on a desired behavior of the new asset. Further, the optimal design parameters may also be validated to determine if the desired behaviour is achieved, by repeating the simulations based on the new parameters. For example, the user-device 114 may enable the end-user to define the desired behavior by providing a range of values or a specific value associated with one or more attributes of the new asset, determined through the simulation.

In an alternate embodiment, the asset simulation model may correspond to a fielded asset, say the asset 108, in the industrial plant 106. In this case, the simulations may be performed to determine one or more anomalies in a behavior of the fielded asset. Further, the one or more anomalies may be indicated to the end-user through the user device 114.

FIG 7 shows a flowchart of an exemplary method 700 for performing the simulations associated with rendering a visualization of the production process, on the user device 114, according to an embodiment of the present invention.

In the present embodiment, the simulations are performed based on process simulation models. Herein, the process simulation model is a simulation model of a production process performed in the industrial plant 106. The process simulation model may be generated based on one or more other process simulation models and/or asset simulation models for similar production processes, available in the database 124 or imported from other simulation tools on the user device 114. The production process may involve batch processes, e.g., assembling of automotive parts on a conveyer belt using robotic arms, or continuous processes, e.g., a petrochemical refinery.

At step 702, the simulation model generation module 302 configures a process simulation model based on the data package received from the cloud computing system 102. As in the case of asset simulation models, configuration of the process simulation model includes modifying simulation parameters associated with the process simulation model based on values obtained from the data package. In an embodiment, user device 114 may be configured to provide the end-user an option to modify the simulation parameters.

At step 704, the simulation instance creation module 304 generates one or more process simulation instances based on the configured process simulation model. Here, the process simulation instances are simulation instances generated from the configured process simulation model.

At step 706, the simulation instance execution module 306 executes the one or more process simulation instances in a simulation environment, to generate the one or more simulation results via the simulation result generation module 308.

At step 708, the one or more simulation results are further analyzed by, the simulation results analysis module 310, to determine one or more parameters required for rendering a visualization of the production process. For example, the one or more simulation results may indicate interactions between assets or processes in the production process, effect of the interaction etc.

The parameters obtained via analysis of the one or more simulation results are further used to generate or modify graphical components required for rendering the visualization of the production process. For example, the graphical components may include charts, graphical representation of the production process flow etc. In an exemplary embodiment, the rendering may be associated with replaying the production process, to enable the end-user to manually identify one or more production bottlenecks. In another exemplary embodiment, the one or more simulation results are analyzed, by the simulation results analysis module 310, to determine one or more bottlenecks.

The one or more simulation results are further ingested to the cloud computing system for determining a performance attribute associated with the production process. The performance attribute may include production rate, production efficiency, process failures etc. The cloud computing system 102 may further determine one or more bottlenecks in the production process based on the analysis of the one or more simulation results. Based on the analysis, one or more anomalies in the production process may be identified. For example, the one or more anomalies may include excessive power consumption, operating parameters outside a desired range, low throughput. The anomalies may be a result of several factors such as an asset performing below optimum efficiency, inefficient utilisation of resources, obstacles, failed or faulty assets, raw material issues etc. Each of the anomalies may correspond to a bottleneck in the production process. For example, high temperature in a heat exchanger resulting from inadequate flowrate of coolant within the heat exchanger may lead to reduced efficiency of the heat exchanger. In another example, excessive power consumption at one or more assets due to overloading may lead to failure of the asset and so on.

In a further embodiment, one or more recommendations to overcome the one or more bottlenecks may be generated based on a predetermined logic. For example, the recommendations may be fetched from a look-up table present within the database 124 of the cloud computing system 102. The look-up table may comprise a list of bottlenecks and corresponding recommendations. The recommendations may include textual recommendations such as *"Perform maintenance for motor A"* or suggested configuration settings for one or more one or more assets in the industrial plant 106.

In an embodiment, an outcome of implementing the one or more recommendations in the production process may be validated before providing the recommendations to the end-user as explained below with reference to FIG 8.

FIG 8 shows a flowchart of an exemplary method 800 for validating the outcome of implementing the one or more recommendations within the production process, in accordance with an embodiment of the present invention.

At step 802, the process simulation model is configured based on the one or more recommendations. For example, simulation parameters of the process simulation modify in accordance with a suggested configuration for one or more assets involved in the production process.

At step 804, one or more process simulation instances are generated based on the configured process simulation model.

At step 806, the one or more process simulation instances are executed in the simulation environment to generate one or more simulation results.

At step 808, the one or more simulation results to determine whether the one or more bottlenecks in the production process are overcome by implementing the one or more recommendations in the production process. If the one or more bottlenecks are overcome, i.e., if anomalies corresponding to the bottlenecks are addressed, the one or more recommendations are validated and a notification indicating the one or more recommendations is generated on the user device 114 as shown at step 810. Otherwise, an alternative configuration setting may be identified as shown at step 812. In an example, the alternative configuration setting may be generated by the predetermined logic. In another example, the alternative configuration setting may be manually provided by the end-user to the user device 114 via an input means. Further, steps 802 to 808 are repeated for the alternative configuration settings.

In another implementation, the configuration settings may be manually provided to the user device 114, by an expert user. Further, manually entered configuration settings may also be validated similar to the validation of suggested configuration in method 800.

Advantageously, the present invention facilitates seamless closed loop simulations based on real-time IoT data collected from a wide range of assets based on demand from a tenant of the cloud-computing system 102. Further, as the digital twin data is provisioned based on the type of request from the user device, the user device is not overburdened with excessive amounts of data.

## Claims

1. An IoT environment (100) for enabling closed loop simulations in real-time, comprising:
at least one source configured to provide IoT data associated with at least one asset (108) of at least one industrial plant (106);
at least one user device (114); and
a cloud computing system (102) communicatively coupled to the at least one source and the at least one user device (114), wherein the cloud computing system (102) is configured to:
receive (S502) IoT data associated with the at least one asset (108) of the at least one industrial plant (106), in real-time, from the at least one source;
configure (S504) a digital twin corresponding to at least one of the asset (108) and a production process associated with the industrial plant (106) based on the IoT data received;
generate (S506) at least one data package based on the configured digital twin upon receiving a request for accessing the digital twin from the user device (114) by:
determining a type of the request received from the user device (114);
provisioning, based on the type of request, digital twin data to be provided to the user device (114) by selecting the digital twin data from data points associated with an instance or state of the digital twin in real-time; and
generating the data package based on the provisioned digital twin data; and
transmit (S508) the at least one data package to the user device (114), wherein the at least one data package is for enabling the user device (114) to perform one or more closed loop simulations locally in real-time based on the data package.

2. The IoT environment (100) according to claim 1, wherein the one or more simulations performed on the user device (114) is associated with determining behavior of a new asset adapted for the industrial plant (106).

3. The IoT environment (100) according to one of claim 1 and 2, wherein the user device (114) is configured to perform the one or more simulations associated with determining the behavior of the new asset, by:
configuring an asset simulation model for a new asset, based on the data package, wherein the asset simulation model is a simulation model corresponding to the at least one asset (108) of the industrial plant (106);
generating one or more asset (108) simulation instances based on the configured asset simulation model; and
executing the one or more asset (108) simulation instances in a simulation environment, to generate one or more simulation results; and
providing an output indicative of the behavior of the new asset on the user device (114), based on the one or more simulation results.

4. The IoT environment (100) according to claim 3, wherein the user device (114) is further configured to:
compute optimal design parameters based on analysis of the one or more simulation results; and
generate a notification indicative of the optimal design parameters for the new asset on the user device (114) .

5. The IoT environment (100) according to claim 1, wherein the one or more simulations performed on the user device (114) is associated with rendering a visualization of the production process associated with the industrial plant (106) .

6. The IoT environment (100) according to one of claim 1 and 5, wherein the user device (114) is configured to perform the one or more simulations associated with rendering the visualization of the production process associated with the industrial plant (106), by:
configuring a process simulation model based on the data package, wherein the process simulation model is a simulation model corresponding to the production process of the industrial plant (106) ;
generating one or more process simulation instances based on the configured process simulation model;
executing the one or more process simulation instances in a simulation environment to generate one or more simulation results; and
rendering a visualization of the production process in real-time, on the user device (114) based on the one or more simulation results.

7. The IoT environment (100) according to any one of the claims 5 and 6, wherein the user device (114) is further configured to:
determine one or more bottlenecks associated with the production process by analyzing the one or more simulation results.

8. The IoT environment (100) according to one of claims 1 and 7, wherein the user device (114) is further configured to:
generate one or more recommendations to overcome the one or more bottlenecks determined, based on a predetermined logic.

9. The IoT environment (100) according to one of claims 1 and 8, wherein the user device (114) is further configured to:
validate an outcome of implementing the one or more recommendations in the production process; and
generate a notification indicating the one or more recommendations on the user device (114), if the outcome of applying the one or more recommendations to the production process is validated.

10. The IoT environment (100) according to one of claims 1 and 9, wherein the user device (114) validates the outcome of implementing the one or more recommendations within the production process, by:
configuring the process simulation model based on the one or more recommendations;
generating one or more process simulation instances based on the configured process simulation model;
executing the one or more process simulation instances in the simulation environment to generate one or more further simulation results;
analyzing the one or more further simulation results to determine whether the one or more bottlenecks in the production process are overcome by implementing the one or more recommendations in the production process, wherein the one or more recommendations are validated if the one or more bottlenecks are overcome.

11. The IoT environment (100) according to any one of the claims 1 to 7, wherein the user device (114) is further configured to:
ingest an outcome of the one or more simulations to the cloud computing system (102).

12. The IoT environment (100) according to any one of the claims 1 and 7, wherein the cloud computing system (102) is further configured to:
analyze the outcome of the one or more simulations received from the user device (114) to determine at least one insight corresponding to the industrial plant (106); and
provide a notification indicative of the at least one insight on a user interface.

13. A cloud-implemented method for performing closed loop simulations in an IoT environment (100), the method (500) comprising:
receiving, by a cloud computing system (102) IoT data associated with at least one asset (108) of at least one industrial plant (106), in real-time, from at least one source communicatively coupled to the cloud computing system (102);
configuring a digital twin corresponding to at least one of the asset (108) and a production process associated with the industrial plant (106) based on the IoT data received;
generating at least one data package based on the configured digital twin upon receiving a request for accessing the digital twin from a user device (114) communicatively coupled to the cloud computing system (120) by:
determining a type of the request received from the user device (114);
provisioning, based on the type of request, digital twin data to be provided to the user device (114) by selecting the digital twin data from data points associated with an instance or state of the digital twin in real-time; and
generating the data package based on the provisioned digital twin data; and
transmitting the at least one data package to the user device (114), wherein the at least one data package is for enabling the user device (114) to perform one or more closed loop simulations locally based on the data package.

14. The method (500) according to claim 13, further comprising:
analysing an outcome of the one or more simulations received from the user device (114) to determine at least one insight corresponding to the industrial plant (106); and
providing a notification indicative of the at least one insight on a user interface.

## Patentansprüche

1. IoT-Umgebung (100) zum Ermöglichen von Simulationen mit geschlossenem Regelkreis in Echtzeit, umfassend:
mindestens eine Quelle, die dazu konfiguriert ist, IoT-Daten bereitzustellen, die mit mindestens einem Asset (108) mindestens einer Industrieanlage (106) assoziiert sind;
mindestens eine Benutzervorrichtung (114); und
ein Cloud-Computing-System (102), das kommunikativ mit der mindestens einen Quelle und der mindestens einen Benutzervorrichtung (114) gekoppelt ist, wobei das Cloud-Computing-System (102) zu Folgendem konfiguriert ist:
Empfangen (S502) von IoT-Daten, die mit dem mindestens einen Asset (108) der mindestens einen Industrieanlage (106) assoziiert sind, in Echtzeit von der mindestens einen Quelle;
Konfigurieren (S504) eines digitalen Zwillings, der mindestens einem von dem Asset (108) und einem Produktionsprozess entspricht, der mit der Industrieanlage (106) assoziiert ist, basierend auf den empfangenen IoT-Daten;
Erzeugen (S506) mindestens eines Datenpakets basierend auf dem konfigurierten digitalen Zwilling bei Empfang einer Anforderung zum Zugreifen auf den digitalen Zwilling von der Benutzervorrichtung (114) durch Folgendes:
Bestimmen eines Typs der Anforderung, die von der Benutzervorrichtung (114) empfangen wird;
Bereitstellen von Daten des digitalen Zwillings, die der Benutzervorrichtung (114) bereitgestellt werden sollen, basierend auf der Art der Anforderung durch Auswählen der Daten des digitalen Zwillings aus Datenpunkten, die mit einer Instanz oder einem Zustand des digitalen Zwillings assoziiert sind, in Echtzeit; und
Erzeugen des Datenpakets basierend auf den bereitgestellten Daten des digitalen Zwillings; und
Übertragen (S508) des mindestens einen Datenpakets an die Benutzervorrichtung (114), wobei das mindestens eine Datenpaket dazu dient, die Benutzervorrichtung (114) zu befähigen, eine oder mehrere Simulationen mit geschlossenem Regelkreis basierend auf dem Datenpaket lokal in Echtzeit durchzuführen.

2. IoT-Umgebung (100) nach Anspruch 1, wobei die eine oder die mehreren Simulationen, die an der Benutzervorrichtung (114) durchgeführt werden, mit einem Bestimmen des Verhaltens eines neuen Assets assoziiert sind, das für die Industrieanlage (106) angepasst ist.

3. IoT-Umgebung (100) nach einem der Ansprüche 1 und 2, wobei die Benutzervorrichtung (114) dazu konfiguriert ist, die eine oder die mehreren Simulationen, die mit dem Bestimmen des Verhaltens des neuen Assets assoziiert sind, durch Folgendes durchzuführen:
Konfigurieren eines Asset-Simulationsmodells für ein neues Asset basierend auf dem Datenpaket, wobei das Asset-Simulationsmodell ein Simulationsmodell ist, das dem mindestens einen Asset (108) der Industrieanlage (106) entspricht;
Erzeugen einer oder mehrerer Simulationsinstanzen des Assets (108) basierend auf dem konfigurierten Asset-Simulationsmodell; und
Ausführen der einen oder der mehreren Simulationsinstanzen des Assets (108) in einer Simulationsumgebung, um ein oder mehrere Simulationsergebnisse zu erzeugen; und
Bereitstellen einer Ausgabe, die das Verhalten des neuen Assets auf der Benutzervorrichtung (114) angibt, basierend auf dem einen oder den mehreren Simulationsergebnissen.

4. IoT-Umgebung (100) nach Anspruch 3, wobei die Benutzervorrichtung (114) ferner zu Folgendem konfiguriert ist:
Berechnen optimaler Designparameter basierend auf einer Analyse des einen oder der mehreren Simulationsergebnisse; und
Erzeugen einer Benachrichtigung, die die optimalen Designparameter für das neue Asset auf der Benutzervorrichtung (114) angibt.

5. IoT-Umgebung (100) nach Anspruch 1, wobei die eine oder die mehreren Simulationen, die auf der Benutzervorrichtung (114) durchgeführt werden, mit Rendern einer Visualisierung des Produktionsprozesses assoziiert sind, der mit der Industrieanlage (106) assoziiert ist.

6. IoT-Umgebung (100) nach einem der Ansprüche 1 und 5, wobei die Benutzervorrichtung (114) dazu konfiguriert ist, die eine oder die mehreren Simulationen, die mit dem Rendern der Visualisierung des Produktionsprozesses assoziiert sind, der mit der Industrieanlage (106) assoziiert ist, durch Folgendes durchzuführen:
Konfigurieren eines Prozesssimulationsmodells basierend auf dem Datenpaket, wobei das Prozesssimulationsmodell ein Simulationsmodell ist, das dem Produktionsprozess der Industrieanlage (106) entspricht;
Erzeugen einer oder mehrerer Prozesssimulationsinstanzen basierend auf dem konfigurierten Prozesssimulationsmodell;
Ausführen der einen oder der mehreren Prozesssimulationsinstanzen in einer Simulationsumgebung, um ein oder mehrere Simulationsergebnisse zu erzeugen; und
Rendern einer Visualisierung des Produktionsprozesses in Echtzeit auf der Benutzervorrichtung (114) basierend auf dem einen oder den mehreren Simulationsergebnissen.

7. IoT-Umgebung (100) nach einem der Ansprüche 5 und 6, wobei die Benutzervorrichtung (114) ferner zu Folgendem konfiguriert ist:
Bestimmen eines oder mehrerer Engpässe, die mit dem Produktionsprozess assoziiert sind, durch Analysieren des einen oder der mehreren Simulationsergebnisse.

8. IoT-Umgebung (100) nach einem der Ansprüche 1 und 7, wobei die Benutzervorrichtung (114) ferner zu Folgendem konfiguriert ist:
Erzeugen einer oder mehrerer Empfehlungen zum Überwinden des einen oder der mehreren bestimmten Engpässe basierend auf einer vorbestimmten Logik.

9. IoT-Umgebung (100) nach einem der Ansprüche 1 und 8, wobei die Benutzervorrichtung (114) ferner zu Folgendem konfiguriert ist:
Validieren eines Ergebnisses des Implementierens der einen oder der mehreren Empfehlungen im Produktionsprozess; und
Erzeugen einer Benachrichtigung, die die eine oder die mehreren Empfehlungen auf der Benutzervorrichtung (114) angibt, falls das Ergebnis des Anwendens der einen oder der mehreren Empfehlungen auf den Produktionsprozess validiert ist.

10. IoT-Umgebung (100) nach einem der Ansprüche 1 und 9, wobei die Benutzervorrichtung (114) das Ergebnis des Implementierens der einen oder der mehreren Empfehlungen innerhalb des Produktionsprozesses durch Folgendes validiert:
Konfigurieren des Prozesssimulationsmodells basierend auf der einen oder den mehreren Empfehlungen;
Erzeugen einer oder mehrerer Prozesssimulationsinstanzen basierend auf dem konfigurierten Prozesssimulationsmodell;
Ausführen der einen oder der mehreren Prozesssimulationsinstanzen in der Simulationsumgebung, um ein oder mehrere weitere Simulationsergebnisse zu erzeugen;
Analysieren des einen oder der mehreren weiteren Simulationsergebnisse, um zu bestimmen, ob der eine oder die mehreren Engpässe in dem Produktionsprozess durch Implementieren der einen oder der mehreren Empfehlungen in dem Produktionsprozess überwunden werden, wobei die eine oder die mehreren Empfehlungen validiert werden, falls der eine oder die mehreren Engpässe überwunden werden.

11. IoT-Umgebung (100) nach einem der Ansprüche 1 bis 7, wobei die Benutzervorrichtung (114) ferner zu Folgendem konfiguriert ist:
Aufnehmen eines Ergebnisses der einen oder der mehreren Simulationen in das Cloud-Computing-System (102).

12. IoT-Umgebung (100) nach einem der Ansprüche 1 und 7, wobei das Cloud-Computing-System (102) ferner zu Folgendem konfiguriert ist:
Analysieren des Ergebnisses der einen oder der mehreren Simulationen, die von der Benutzervorrichtung (114) empfangen werden, um mindestens eine Erkenntnis zu bestimmen, die der Industrieanlage (106) entspricht; und
Bereitstellen einer Benachrichtigung, die die mindestens eine Erkenntnis auf einer Benutzeroberfläche angibt.

13. Cloud-implementiertes Verfahren zur Durchführung von Simulationen mit geschlossenem Regelkreis in einer IoT-Umgebung (100), wobei das Verfahren (500) Folgendes umfasst:
Empfangen von IoT-Daten, die mit mindestens einem Asset (108) mindestens einer industriellen Anlage (106) assoziiert sind, durch ein Cloud-Computing-System (102) in Echtzeit von mindestens einer Quelle, die kommunikativ mit dem Cloud-Computing-System (102) gekoppelt ist;
Konfigurieren eines digitalen Zwillings, der mindestens einem von dem Asset (108) und/oder einem Produktionsprozess entspricht, der mit der Industrieanlage (106) assoziiert ist, basierend auf den empfangenen IoT-Daten;
Erzeugen mindestens eines Datenpakets basierend auf dem konfigurierten digitalen Zwilling bei Empfang einer Anforderung zum Zugreifen auf den digitalen Zwilling von einer Benutzervorrichtung (114), die kommunikativ mit dem Cloud-Computing-System (120) gekoppelt ist, durch Folgendes:
Bestimmen eines Typs der Anforderung, die von der Benutzervorrichtung (114) empfangen wird;
Bereitstellen von Daten des digitalen Zwillings, die der Benutzervorrichtung (114) bereitgestellt werden sollen, basierend auf der Art der Anforderung durch Auswählen der Daten des digitalen Zwillings aus Datenpunkten, die mit einer Instanz oder einem Zustand des digitalen Zwillings assoziiert sind, in Echtzeit; und
Erzeugen des Datenpakets basierend auf den bereitgestellten Daten des digitalen Zwillings; und
Übertragen des mindestens einen Datenpakets an die Benutzervorrichtung (114), wobei das mindestens eine Datenpaket dazu dient, die Benutzervorrichtung (114) zu befähigen, eine oder mehrere Simulationen mit geschlossenem Regelkreis basierend auf dem Datenpaket lokal durchzuführen.

14. Verfahren (500) nach Anspruch 13, ferner umfassend:
Analysieren eines Ergebnisses der einen oder der mehreren Simulationen, die von der Benutzervorrichtung (114) empfangen werden, um mindestens eine Erkenntnis zu bestimmen, die der Industrieanlage (106) entspricht; und
Bereitstellen einer Benachrichtigung, die die mindestens eine Erkenntnis auf einer Benutzeroberfläche angibt.

## Revendications

1. Environnement (100) de l'IdO pour permettre des simulations en boucle fermée en temps réel, comprenant :
au moins une source configurée pour fournir des données de l'IdO associées à au moins un actif (108) d'au moins une installation industrielle (106) ;
au moins un dispositif (114) d'utilisateur ; et
un système informatique (102) en nuage couplé de manière communicative à la ou aux sources et au(x) dispositif(s) (114) d'utilisateur, le système informatique (102) en nuage étant configuré pour :
recevoir (S502) des données de l'IdO associées à l'actif ou aux actifs (108) de l'installation ou des installations industrielles (106), en temps réel, en provenance de la ou des sources ;
configurer (S504) un jumeau numérique correspondant à l'actif (108) et/ou à un processus de production associé à l'installation industrielle (106) d'après les données de l'IdO reçues ;
générer (S506) au moins un lot de données basé sur le jumeau numérique configuré suite à la réception d'une demande d'accès au jumeau numérique provenant du dispositif (114) d'utilisateur par :
la détermination d'un type de la demande reçue en provenance du dispositif (114) d'utilisateur ;
la mise à disposition, en fonction du type de demande, de données de jumeau numérique à fournir au dispositif (114) d'utilisateur en sélectionnant les données de jumeau numérique parmi des points de données associés à une instance ou à un état du jumeau numérique en temps réel ; et
la génération du lot de données d'après les données de jumeau numérique fournies ; et
la transmission (S508) du ou des lots de données au dispositif (114) d'utilisateur, le ou les lots de données étant destinés à permettre au dispositif (114) d'utilisateur d'effectuer localement une ou plusieurs simulations en boucle fermée en temps réel sur la base du lot de données.

2. Environnement (100) de l'IdO selon la revendication 1, la ou les simulations effectuées sur le dispositif (114) d'utilisateur étant associées à la détermination d'un comportement d'un nouvel actif adapté pour l'installation industrielle (106).

3. Environnement (100) de l'IdO selon l'une des revendications 1 et 2, le dispositif (114) d'utilisateur étant configuré pour effectuer la ou les simulations associées à la détermination du comportement du nouvel actif, par :
la configuration d'un modèle de simulation d'actifs pour un nouvel actif, sur la base du lot de données, le modèle de simulation d'actifs étant un modèle de simulation correspondant à l'actif ou aux actifs (108) de l'installation industrielle (106) ;
la génération d'une ou de plusieurs instances de simulation d'actifs (108) sur la base du modèle de simulation d'actifs configuré ; et
l'exécution de l'instance ou des instances de simulation d'actifs (108) dans un environnement de simulation, pour générer un ou plusieurs résultats de simulation ; et
la fourniture d'une sortie indicative du comportement du nouvel actif sur le dispositif (114) d'utilisateur, sur la base du ou des résultats de simulation.

4. Environnement (100) de l'IdO selon la revendication 3, le dispositif (114) d'utilisateur étant en outre configuré pour :
calculer des paramètres de conception optimaux sur la base d'une analyse du ou des résultats de simulation ; et
générer une notification indicative des paramètres de conception optimaux pour le nouvel actif sur le dispositif (114) d'utilisateur.

5. Environnement (100) de l'IdO selon la revendication 1, la ou les simulations effectuées sur le dispositif (114) d'utilisateur étant associées au rendu d'une visualisation du processus de production associé à l'installation industrielle (106).

6. Environnement (100) de l'IdO selon l'une des revendications 1 et 5, le dispositif (114) d'utilisateur étant configuré pour réaliser la ou les simulations associées au rendu de la visualisation du processus de production associé à l'installation industrielle (106), par :
la configuration d'un modèle de simulation de processus sur la base du lot de données, le modèle de simulation de processus étant un modèle de simulation correspondant au processus de production de l'installation industrielle (106) ;
la génération d'une ou de plusieurs instances de simulation de processus sur la base du modèle de simulation de processus configuré ;
l'exécution de l'instance ou des instances de simulation de processus dans un environnement de simulation pour générer un ou plusieurs résultats de simulation ; et
le rendu d'une visualisation du processus de production en temps réel, sur le dispositif (114) d'utilisateur sur la base du ou des résultats de simulation.

7. Environnement (100) de l'IdO selon l'une quelconque des revendications 5 et 6, le dispositif (114) d'utilisateur étant en outre configuré pour :
déterminez un ou plusieurs goulots d'étranglement associés au processus de production en analysant le ou les résultats de simulation.

8. Environnement (100) de l'IdO selon l'une des revendications 1 et 7, le dispositif (114) d'utilisateur étant en outre configuré pour :
générer une ou plusieurs recommandations pour surmonter le ou les goulots d'étranglement déterminés, sur la base d'une logique prédéterminée.

9. Environnement (100) de l'IdO selon l'une des revendications 1 et 8, le dispositif (114) d'utilisateur étant en outre configuré pour :
valider un résultat de la mise en œuvre de la ou des recommandations dans le processus de production ; et
générer une notification indiquant la ou les recommandations sur le dispositif (114) d'utilisateur, si le résultat de l'application de la ou des recommandations au processus de production est validé.

10. Environnement (100) de l'IdO selon l'une des revendications 1 et 9, le dispositif (114) d'utilisateur validant le résultat de la mise en œuvre de la ou des recommandations au sein du processus de production, par :
la configuration du modèle de simulation de processus sur la base de la ou des recommandations ;
la génération d'une ou de plusieurs instances de simulation de processus sur la base du modèle de simulation de processus configuré ;
l'exécution de l'instance ou des instances de simulation de processus dans l'environnement de simulation pour générer un ou plusieurs résultats de simulation supplémentaires ;
l'analyse du ou des résultats de simulation supplémentaires pour déterminer si le ou les goulots d'étranglement dans le processus de production sont surmontés par la mise en œuvre de la ou des recommandations dans le processus de production, la ou les recommandations étant validées si le ou les goulots d'étranglement sont surmontés.

11. Environnement (100) de l'IdO selon l'une quelconque des revendications 1 à 7, le dispositif (114) d'utilisateur étant en outre configuré pour :
ingérer un résultat de la ou des simulations dans le système informatique (102) en nuage.

12. Environnement (100) de l'IdO selon l'une quelconque des revendications 1 et 7, le système informatique (102) en nuage étant en outre configuré pour :
analyser le résultat de la ou des simulations reçues du dispositif (114) d'utilisateur pour déterminer au moins une intellection correspondant à l'installation industrielle (106) ; et
fournir une notification indicative de l'intellection ou des intellections sur une interface d'utilisateur.

13. Procédé mis en œuvre en nuage pour réaliser des simulations en boucle fermée dans un environnement (100) de l'IdO, le procédé (500) comprenant :
la réception, par un système informatique (102) en nuage, de données de l'IdO associées à au moins un actif (108) d'au moins une installation industrielle (106), en temps réel, en provenance d'au moins une source couplée de manière communicative au système informatique (102) en nuage ;
la configuration d'un jumeau numérique correspondant à l'actif (108) et/ou à un processus de production associé à l'installation industrielle (106) d'après les données de l'IdO reçues ;
la génération d'au moins un lot de données sur la base du jumeau numérique configuré suite à la réception d'une demande d'accès au jumeau numérique provenant d'un dispositif (114) d'utilisateur couplé de manière communicative au système informatique (120) en nuage par :
la détermination d'un type de la demande reçue en provenance du dispositif (114) d'utilisateur ;
la mise à disposition, en fonction du type de demande, de données de jumeau numérique à fournir au dispositif (114) d'utilisateur en sélectionnant les données de jumeau numérique parmi des points de données associés à une instance ou à un état du jumeau numérique en temps réel ; et
la génération du lot de données d'après les données de jumeau numérique fournies ; et
la transmission du ou des lots de données au dispositif (114) d'utilisateur, le ou les lots de données étant destinés à permettre au dispositif (114) d'utilisateur d'effectuer localement une ou plusieurs simulations en boucle fermée sur la base du lot de données.

14. Procédé (500) selon la revendication 13, comprenant en outre :
l'analyse d'un résultat de la ou des simulations reçues du dispositif (114) d'utilisateur pour déterminer au moins une intellection correspondant à l'installation industrielle (106) ; et
la fourniture d'une notification indicative de l'intellection ou des intellections sur une interface d'utilisateur.
